# EUROPÄISCHE PATENTSCHRIFT

(11) **EP 1 106 632 B1**
(45) Veröffentlichungstag und Bekanntmachung des Hinweises auf die Patenterteilung: **21.05.2014**
(21) Anmeldenummer: 00123212.3
(22) Anmeldetag: 26.10.2000
(51) Int. Cl.: C08F 285/00, C08F 259/04, C08L 51/00, C08F 14/06, C08F 259/00, C08F 8/00

(54) **Verfahren zur Herstellung thermoplastischer Formmassen**
Process for the production of thermoplastic molding materials
Procédé pour la production de matériaux thermoplastiques pour moulage

(30) Priorität: 07.12.1999 DE 19958820
(43) Veröffentlichungstag der Anmeldung: 13.06.2001
(73) Patentinhaber: VESTOLIT GmbH & Co. KG, 45772 Marl (DE)
(72) Erfinder: Neu, Thomas, Dr., 48249 Dülmen (DE); Stienecker, Axel, Dr., 48151 Münster (DE); Bordeianu, Radu, Dr., 45772 Marl (DE); Sturm, Harald, Dr., 46286 Dorsten (DE); Schmitt, Wilhelm Friedrich, Dr., 46282 Dorsten (DE)
(74) Vertreter: Godemeyer Blum Lenze - werkpatent

(56) Entgegenhaltungen:
- EP-A- 0 810 241
- EP-A- 0 826 703
- FR-A- 2 309 569
- US-A- 3 290 265
- US-A- 3 994 991
- US-A- 5 232 991
- US-A- 5 872 155

## Beschreibung

Die Erfindung betrifft die Herstellung und Verarbeitung thermoplastischer Massen auf der Basis von Vinylchloridpolymerisaten mit ausgezeichneten Kerbschlagzähigkeiten. Zur Kerbschlagmodifizierung wird ein schalenartiges, besonders kautschukarmes Pfropf-Copolymerisat eingesetzt, das in Form eines Polymerlatexes vor oder während der Vinylchloridpolymerisation zugegeben wird. Dabei pfropft das entstehende Polyvinylchlorid (PVC) auf die Modifierlatexteilchen. Die Komponente zur Schlagzähverbesserung besteht aus einem harten Kern und einer weichen, kautschukartigen Schale.

Polyvinylchlorid (PVC) ist wegen seines guten Preis-Leistungsverhältnisses und seiner vielfältigen Einsatzmöglichkeiten eines der meistverwendeten Polymere. PVC alleine ist jedoch für viele Anwendungen wie z. B. Fensterprofile zu spröde. Um die Schlagzähigkeit von PVC zu verbessern, wurden Vinylchloridpolymerisate in der Vergangenheit mit den verschiedensten Modifizierungsmitteln versehen. Als Beispiele seien polymere Schlagzähmodifier vom Butadientyp, wie AcrylnitrilButadien-Styrol (ABS) und Methacrylsäuremethylester-Butadien-Styrol (MBS); Copolymere des Ethylens mit Vinylacetat (EVA); chlorierte Polyolefine wie chloriertes Polyethylen (CPE); Ethylen-Propylen-Kautschuke und Polymere vom Acrylattyp, wie Homo- und Copolymere von Acrylsäurealkylestern genannt. So ist z.B. in der Anmeldung DE 1 082 734 ein Verfahren zur Herstellung von schlagfestem Polyvinylchlorid beschrieben. Das beanspruchte Polymer wird durch Polymerisation von Vinylchlorid in wäßriger Suspension mit Hilfe von Suspensionsstabilisatoren und organischen, bzw. anorganischen Aktivatoren hergestellt, dadurch gekennzeichnet, dass man die Polymerisation des Vinylchlorids in Gegenwart wäßriger Emulsionen bei Raumtemperatur zähelastischer Polymerisate durchführt, wobei die Polymerisate -bezogen auf Feststoff- in einer Menge von 2 - 25 Gew.-% vorliegen. Dabei können die Polymerisate Homopolymerisate von Acrylsäure- oder Vinylsäureester bzw. Mischpolymerisate mit anderen Verbindungen sein.

Nachteil ist bei diesem Verfahren, dass man zur Profilherstellung sehr viel des teuren Acrylester benötigt, um eine ausreichend hohe Kerbschlagzähigkeit z.B. eines PVC-Profils zu erzielen.

Auch gepfropfte oder Kern/Schale-Schlagzähmodifier mit schichtartigem Aufbau sind vom Prinzip her bekannt. Die DE 4 302 552 beschreibt Pfropf- und Kern-Schale-Copolymerisate mit verbesserter Phasenanbindung zwischen Pfropfgrundlage und aufgepfropfter Polymerphase. Die Pfropf- und Kern-Schale-Copolymerisate werden hergestellt aus einer peroxygruppenhaltigen Polymerphase a), welche 0.01 bis 20 Gew.-% einer olefinisch zweifach ungesättigten Peroxyverbindung der Formel H₂C=CH-O-CO-R¹-CO-O-O-CO-R¹-CO-O-CH=CH₂ und 80 bis 99.99 Gew.-% eines oder mehrerer Comonomere aus der Gruppe der (Meth)acrylsäureester von Alkoholen mit 1 bis 10 C-Atomen, Vinylester von gesättigten aliphatischen Carbonsäuren mit 2 bis 10 C-Atomen, Olefine, Vinylaromaten, Vinylhalogenide und/oder Vinylether enthält und einer darauf gefpropften Polymerphase b), die durch Aufpfropfen eines oder mehrerer Comonomere aus der Gruppe der (Meth)acrylsäureester von Alkoholen mit 1 bis 10 C-Atomen, Vinylester von gesättigten aliphatischen Carbonsäuren mit 2 bis 10 C-Atomen, Olefine. Vinylaromaten, Vinylhalogenide und Styrol sowie Styrolderivate auf die peroxygruppenhaltige Polymerphase a) erhalten wird. Nachteilig bei diesem Verfahren zur Herstellung von Kern-Schale-Polymeren ist, dass zusätzlich ein empfindliches peroxydgruppenhaltiges Comonomer eingesetzt werden muß, um die Phasenanbindung zwischen Polymerphase a) und b) zu gewährleisten, bei dem sorgfältig darauf geachtet werden muß, dass die Peroxidfunktionen nicht zerstört werden. Beschrieben ist dort auch der Einsatz als Schlagzähmodifier in Kunststoffen, allerdings in fester Form. Das ist aber ebenfalls von Nachteil, da dieser Umstand ein zusätzliches Aufarbeitungsverfahren, nämlich die Trocknung, bedingt. Weiterhin wird die Schale in unvernetzter Form eingesetzt, was zu einer teilweisen Abscherung des Schalenpolymers während des Verarbeitungsvorgangs führt und von großem Nachteil ist.

US5872155 und EP0810241 offenbaren ein Verfahren zur Herstellung via Mikrosuspensionpolymerisation von Polymerlatex aus Teilchen von Kern-Schale Copolymeren.

Auch EP 0 600 478 beschreibt die Herstellung eines Pfropfcopolymerlatex von Kern-Schale-Dispersionsteilchen mit verbesserter Phasenanbindung zwischen Kern und Schale in einem zweistufigen Emulsionspolymerisationsverfahren. In der ersten Stufe ist jedoch nur ein vernetztes, kautschukelastisches Polymer zulässig. Außerdem muß das Schalenpolymer eine Glasübergangstemperatur (Tg) von über 20 °C besitzen, was sich eher negativ beim Einsatz als Schlagzähmodifier in thermoplastischen Kunstoffen auswirken würde.

Bekannt sind auch Kern-Schale-Modifier zur Verbesserung der Kerbschlagzähigkeit von PVC, die über einen harten Kern und eine weiche Schale aus kautschukartigem Material verfügen. So beschreiben die US 3 763 279 und DE 3 539 414 die Herstellung von Polymersystemen, die einen harten, vernetzten Kern aus Polystyrol und eine weiche, vernetzte Polyacrylat-Schale besitzen. Nachteilig sind zum einen die schlechtere Verträglichkeit des Polystyrolkerns mit der PVC-Matrix, was sich vor allem negativ beim Verschweißen von maßgeschnittenen PVC-Profilen auswirkt. Zum anderen waren diese Verfahren auf Transparenz optimiert, so dass deshalb Polystyrol als Kernmaterial eingesetzt werden mußte. Das ist aber wirtschaftlich ungünstig wenn Transparenz im daraus hergestellten Halbzeug nicht benötigt wird.

US 3 290 265 beschreibt ein Verfahren zur Herstellung via Suspensionpolymerisation von Polyvinylchloridharz. US 5 232 991 offenbart ein Verfahren zur Herstellung via Suspensionpolymerisation von Polyacrylat/PVC Pfropfcopolymeren.

Es bestand somit die Aufgabe, ein Verfahren zu entwickeln, welches die angeführten Nachteile vermeidet. Diese Aufgabe wurde gemäß der Patentansprüche gelöst.

Es wurde nun überraschend gefunden, dass man über einen verringerten Elastomeranteil im Schlagzähmodifier, der über eine Kern-Schale-Struktur durch teilweisen Ersatz der Kautschukphase mit einem Kern aus preiswertem PVC hergestellt wird, im schlagzähgemachten PVC verbesserte Eigenschaften erzielen kann.

Es wurde erfindungsgemäß ein Verfahren zur Herstellung einer thermoplastischen Polyvinylchlorid-Formmasse entwickelt, modifiziert mit einem elastomerhaltigen Kern-Schale-Modifier mit verbesserter Schlag- und Eckenfestigkeit und verbesserten optischen Eigenschaften, wie Oberflächenglanz, bei gleichzeitig verringertem Anteil der Elastomerkomponente gegenüber herkömmlichen, einphasigen Schlagzähmodifiern.

Der Kern des Schlagzähmodifiers besteht aus Polyvinylchlorid oder Vinylchloridcopolymeren und die Schale des Schlagzähmodifiers aus vernetzten Alkylacrylat oder Alkylmethacrylat-Homo- oder Copolymeren. Die Pfropfpolymerisation des Vinylchloridmonomers erfolgt nach in Chemie und Technik bekannten Polymerisationsverfahren in Anwesenheit des zuvorgenannten Kern-Schale-Modifiers. Die Polymerisation wird durch monomerlösliche Radikalinitiatoren, z. B. des Peroxydtyps oder Azoverbindungen eingeleitet. Beispielhaft für Peroxidinitiatoren seien Diacyl-, Dialkylperoxide, Peroxydicarbonate, Alkylperester wie Bis(2-Methylbenzoyl)peroxid, Di-tert.-Butylperoxid, Dilauroylperoxid, Acetylbenzoylperoxid, Dicumylperoxid, Dicetyl-peroxydicarbonat und tert.-Butylperpivalat, sowie für Azoinitiatoren, Azobis-(isobutyronitril) genannt. Die Wahl der Art und Menge des Initiators erfolgt in üblicher Weise nach dem derzeitigen Stand der Technik, wobei auch Initiatorgemische verwendet werden können. Als Suspensionsmittel können primäre Schutzkolloide in Mengen von 0.05 Gew.-% bis 1 Gew.-%, bezogen auf die Gesamtmenge der organischen Phase, zugegeben werden. Es sind beispielhaft zu nennen die weitgehend wasserlöslichen Cellulosederivate mit Viskositäten (für 2 %ige wässrige Lösungen) von 25 bis 3000 mPa·s wie Alkyl-, Hydroxyalkyl-, Alkylhydroxyalkyl- und Carboxyalkylcelluloseether, Polyvinylalkohol, teilverseifte Polyvinylacetate, Mischpolymerisate aus Vinylpyrrolidon und ethylenisch ungesättigten Estern und Polyoxazoline. Zusätzlich können die bekannten nichtionischen Tenside wie z. B. Fettsäureethoxylate, Fettsäureester von Polyolen und Alkoholethoxylate, oder anionischen Tenside wie z. B. Alkylsulfate, Alkyl- oder Alkylarylsulfonate, Sorbitanmonolaurat, Ester und Halbester der Sulfobemsteinsäure, in Mengen von 0.01 bis 1.2 Gew.-Teilen, bezogen auf die Gesamtmenge der organischen Phase, als Suspensionshilfstoffe zugegeben werden. Zusätzlich sind alle bisher bekannten Hilfstoffe für die Durchführung der Polymerisation denkbar (z. B. Encyclopedia of Polymer Science and Technology);

Der Kern-Schale-Modifier wird über Emulsionspolymerisation, die nach literaturbekannten Techniken (z. B. Kunststoffhandbuch Polyvinylchlorid, Bd. 1 u. 2, 2. Auflage, Carl-Hanser-Verlag, 1986) in Wasser in Gegenwart von nach Stand der Technik üblichen Dispersionsmitteln und Initiatoren in 2 Stufen hergestellt, wobei in der 1. Stufe der PVC-Homo- oder -Copolymerkern und in der 2. Stufe die elastomere Schale in Anwesenheit des Kerns synthetisiert wird. Die Emulsionspolymerisation kann vorzugsweise mit geeigneten wasserlöslichen Radikalbildnern initiiert werden. Nach Stand der Technik belaufen sich die üblicherweise eingesetzten Mengen von 0.01 bis 4 Gew.-% bezogen auf das Gesamtgewicht der Monomeren. Als Initiatoren werden beispielsweise Wasserstoffperoxid oder Peroxidderivate wie Ammonium- Natrium- oder Kaliumpersulfat oder -peroxodisulfat, thermisch oder mit Hilfe von geeigneten Reduktionsmitteln (wie z. B. in Houben-Weyl Bd. 14/1 Seite 263 bis 297 beschrieben) zersetzt. Als Reduktionsmittel sind beispielhaft folgende Verbindungen genannt: Natriumsulfit, Natriumhydrogensulfit, Natriumdithionit und Ascorbinsäure. Als Dispergiermittel für die Emulsionspolymerisation können alle dem Stand der Technik bekannten Emulgatoren und Schutzkolloide eingesetzt werden. Die Mengen betragen üblicherweise zwischen 0.5 und 5 Gew.-% bezogen auf das Gesamtgewicht der Monomere. Geeignet sind beispielsweise anionische Tenside wie Alkylsulfate mit einer Kettenlänge von 8 bis 20 C-Atomen, Alkyl- oder Alkylarylsulfate mit vergleichbaren Kettenlängen, Ester- oder Halbester der Sulfobemsteinsäure. Als nichtionische Tenside können z. B. Alkylpolyglykolether oder Alkylarylpolyglykolether mit Ethylenoxideinheiten von 1 bis 30 eingesetzt werden. Gegebenenfalls können auch Schutzkolloide wie Vinylalkohol/VinylacetatCopolymere mit einem Gehalt von 70 bis 100 Mol-% Vinylalkoholeinheiten, Polyvinylpyrrolidone mit einem Molgewicht von 10000 bis 350000 g/mol und Hydroxyalkylcellulosen mit einem Substitutionsgrad von 1 bis 4 verwendet werden. Als Zuschlagstoffe können Säuren, Basen, oder übliche Puffersalze wie Alkaliphosphate oder -carbonate den pH-Wert regeln. Ebenfalls sind die bekannten Molekulargewichtsregler wie Mercaptane, Aldehyde oder Chlorkohlenwasserstoffe einsetzbar.

Im Schlagzähmodifier beträgt der Kernanteil aus PVC zwischen 5 und 80 Gew.-%, bevorzugt zwischen 20 und 60 Gew.-% und der Anteil an Elastomer in der Schale zwischen 20 und 95 Gew.-%, bevorzugt zwischen 40 und 80 Gew.-% .

Der Gesamtdurchmesser der Kern-Schale-Modifierteilchen liegt zwischen 50 und 800 nm, bevorzugt zwischen 60 und 400 nm.
Der Kern des Modifiers besteht aus reinem PVC oder aus einem VC-Copolymer mit mindestens 50 Teilen (bez. auf Monomergesamtmenge) Vinylchlorid.

Die Schale des Schlagzähmodifiers besteht aus einem Alkylacrylat oder -methacrylat Homo- oder Copolymeren mit einer Glasübergangstemperatur < 10 °C, bevorzugt < -10 °C, vernetzt mit einem mehrfunktionellen Comonomeren mit nichtkonjugierten Doppelbindungen. Als Monomere für die Schale des Schlagzähmodifiers kommen Acryl- oder Methacrylsäureester mit einer Kettenlänge der Estergruppe zwischen C₂ und C₁₄, bevorzugt zwischen C₄ und C₈, wie z. B. n-Butyl-, i-Butyl-, n-Hexyl-, n-Octyl- oder 2-Ethylhexylgruppen in Frage. Als Vernetzungsmittel können in der Synthese der Elastomerkomponente solche Verbindungen eingesetzt werden, die mit dem jeweils eingesetzten Schalenmonomer copolymerisierbar sind und mindestens zwei nichtkonjugierte Doppelbindungen aufweisen, wie z. B. Divinylbenzol, (Meth)acrylsäurevinylester, (Meth)acrylsäureallylester, Diallylester der Phthalsäure, Maleinsäure, Triallylcyanurat, Di(meth)acrylate mehrwertiger Alkohole, wie z. B. Trimethylolpropan, Butandiol, Glycerin.

Der Schale des Kern-Schale-Schlagzähmodifiers wird eine zusätzliche verträglichmachende Schicht, bestehend aus Poly(meth)acrylaten mit einer Glasübergangstemperatur > 25 °C, bevorzugt > 70 °C in einem Anteil von max. 50 Gew.-% bezogen auf die gesamte Schale aufpolymerisiert.

Der Anteil an Kern-Schale-Modifier am Gesamtmonomer beträgt zwischen 2 und 80 Gew.-%, bevorzugt zwischen 3 und 50 Gew.-%.

Die erfindungsgemäß hergestellten Polymerisate eignen sich besonders gut für die Verarbeitung durch thermoplastische Formgebung, d.h. die Formgebung unter Anwendung von Wärme und Druck, z. B. durch Kalandrieren, Extrudieren, Tiefziehen, Spritzgiessen oder Verpressen, mit oder ohne Weichmacher, z. B. zur Profilherstellung für Fensterrahmen, zu Folien.

Die folgenden Beispiele erläutern weiter die Ausführungsform der vorliegenden Erfindung.

### Beispiel 1

In diesem Beispiel wird die Herstellung eines schlagzähgemachten PVC auf Basis eines Kern/Schale-Modifiers mit 30 Gew.-% PVC und 70 Gew.-% Polybutylacrylat beschrieben.

### 1. Synthese des Schlagzähmodifiers

### 1.1. Synthese des PVC-Kerns über Emulsionspolymerisation

In einen 235 L Reaktor gibt man 79.57 kg entionisiertes Wasser, 978.8 g einer 7.5 %igen Kaliummyristat-Lösung, 1.036 g Kupfernitrat, 3.329 g Natriumsulfit, 10.82 g tetra-Natriumdiphosphat, und 1.779 kg einer 1 %igen KOH-Lösung.

Der Reaktor wird unter Rührung über den Mantel beheizt. Nach Erreichen der Polymerisationstemperatur von 53 °C, werden 21.55 g Kaliumperoxodisulfat zugegeben. Danach wird der Reaktor mit Stickstoff gespült und evakuiert. Anschließend werden 86.36 kg Vinylchlorid zudosiert.

Das Reaktionsgemisch wird homogenisiert und die Dosierung einer 0.25 %igen H₂O₂-Lösung gestartet. Anschließend werden kontinuierlich und parallel zur Initiatordosierung während des gesamten Polymerisationsvorganges 18.56 kg einer 7.5 %igen Kaliummyristat-Lösung und 2.712 kg entionisiertes Wasser zudosiert.

Die Polymerisation ist nach Druckabfall und 1 h Nachrührzeit beendet. Der PVC-Latex wird entgast und gekühlt. Der Feststoffgehalt beträgt 44.8 %. Über Elektronenmikroskopie wird eine volumenbezogene mittlere Latexteilchengröße von 110 nm gemessen.

### 1.2. Synthese des Kern/Schale-Modifiers über Emulsionspolymerisation

In einen 235 L Reaktor werden 56.5 kg entionisiertes Wasser und 33.48 kg des unter 1.1. synthetisierten PVC-Latex bei laufender Rührung gegeben. Anschließend wird der Reaktor mit Stickstoff gespült und auf Polymerisationstemperatur von 80 °C aufgeheizt. Danach wird gleichzeitig die Dosierung von 34.12 kg *n*-Butylacrylat, 892.9 g Allylmethacrylat, 15.0 kg einer 1 %igen Kaliummyristatlösung und 10 kg einer 0.5 %igen Ammoniumperoxodisulfat-lösung gestartet. Die Polymerisation ist nach 300 min beendet.

Der resultierende Kern/Schale-Modifierlatex hat ein Kern/Schale-Gewichtsverhältnis von 30/70 und eine volumenbezogene mittlere Teilchengröße von ca. 175 nm.

### 2. Synthese des schlagzähmodifizierten PVCs über Suspensionspolymerisation

Ein 150 L-Reaktor wird mit 53.46 kg Wasser, 12.59 kg des unter 1.2. hergestellten Kern/Schale-Modifierlatex, 119.6 g Methylhydroxypropylcellulose, 16.91 g Lauroylperoxid und 14.1 g Dicetylperoxodicarbonat befüllt. Der Reaktor wird mit Stickstoff gespült und evakuiert, danach wird die Rührung eingeschaltet und auf 60 °C aufgeheizt. In der Aufheizphase werden 43.76 kg Vinylchlorid im Schuß zugegeben.

Die Polymerisation ist nach Druckabfall und 1 h Nachrührzeit beendet, der Reaktor wird entgast und die resultierende PVC-Dispersion abfiltriert und in einem Wirbeltrockner getrocknet.

Das Pulver wird anschließend homogenisiert, mit Suspensions-PVC auf einen Kern/Schale-Modifiergehalt von 6.5 % abgemischt und in einer Fensterprofilrezeptur auf einem Krauss-Maffei KMD 90 Extruder bei einer Schneckendrehzahl von 15 UpM weiterverarbeitet. Die am Profil gemessen Eigenschaften sind in Tabelle 1 zusammengefasst.

### Beispiel 2

In diesem Beispiel wird die Herstellung eines schlagzähgemachten PVC auf Basis eines Kern/Schale-Modifiers mit 40 Gew.-% PVC und 60 Gew.-% Polybutylacrylat beschrieben.

### 1. Synthese des Schlagzähmodifiers

### 1.1. Synthese des PVC-Kerns über Emulsionspolymerisation

In einen 235 L Reaktor gibt man 82.45 kg entionisiertes Wasser, 806.1 g einer 7.5 %igen Kaliummyristat-Lösung, 1.036 g Kupfernitrat, 3.329 g Natriumsulfit, 10.82 g tetra-Natriumdiphosphat und 1.779 kg einer 1 %igen KOH-Lösung.

Der Reaktor wird unter Rührung über den Mantel beheizt. Nach Erreichen der Polymerisationstemperatur von 53 °C, werden 21.55 g Kaliumperoxodisulfat zugegeben. Danach wird der Reaktor mit Stickstoff gespült und evakuiert. Anschließend werden 86.36 kg Vinylchlorid zugesetzt.

Das Reaktionsgemisch wird homogenisiert und die Dosierung einer 0.25 %igen H₂O₂-Lösung gestartet. Anschließend werden kontinuierlich und parallel zur Initiatordosierung während des gesamten Polymerisationsvorganges 18.56 kg einer 7.5 %igen Kaliummyristat-Lösung zudosiert.

Die Polymerisation ist nach Druckabfall und 1 h Nachrührzeit beendet. Der PVC-Latex wird entgast und gekühlt. Der Feststoffgehalt beträgt 44.7 %. Über Elektronenmikroskopie wird eine volumenbezogene mittlere Latexteilchengröße von 136 nm gemessen.

### 1.2. Synthese des Kern/Schale-Modifiers über Emulsionspolymerisation

In einen 235 L Reaktor werden 50.24 kg entionisiertes Wasser und 44.74 kg des unter 1.1. synthetisierten PVC-Latex bei laufender Rührung gegeben. Anschließend wird der Reaktor mit Stickstoff gespült und auf Polymerisationstemperatur von 80 °C aufgeheizt. Danach wird gleichzeitig die Dosierung von 29.25 kg *n-*Butylacrylat, 765.3 g Allylmethacrylat, 15.0 kg einer 1 %igen Kaliummyristatlösung und 10 kg einer 0.5 %igen Ammoniumperoxodisulfat-lösung durchgeführt. Die Polymerisation ist nach 300 min beendet.

Der resultierende Kern/Schale-Modifierlatex hat ein Kern/Schale-Gewichtsverhältnis von 40/60 und eine volumenbezogene mittlere Teilchengröße von ca. 170 nm.

### 2. Synthese des schlagzähmodifizierten PVC über Suspensionspolymerisation

Ein 650 L-Reaktor wird mit 240.5 kg Wasser, 53.74 kg des unter 1.2. hergestellten Kern/Schale-Modifierlatex, 532.6 g Methylhydroxypropylcellulose, 53.8 g Lauroylperoxid und 44.85 g Dicetylperoxodicarbonat befüllt. Der Reaktor wird mit Stickstoff gespült und evakuiert, danach wird die Rührung eingeschaltet und auf 60 °C aufgeheizt. In der Aufheizphase werden 194.9 kg Vinylchlorid im Schuß zugegeben.

Die Polymerisation ist nach Druckabfall und 1 h Nachrührzeit beendet, der Reaktor wird entgast und die resultierende PVC-Dispersion wird abfiltriert und in einem Wirbeltrockner getrocknet.

Das Pulver wird anschließend homogenisiert, mit Suspensions-PVC auf einen Kern/Schale-Modifiergehalt von 6.5 % abgemischt und in einer Fensterprofilrezeptur auf einem Krauss-Maffei KMD 90 Extruder bei einer Schneckendrehzahl von 15 UpM weiterverarbeitet. Die am Profil gemessen Eigenschaften sind in Tabelle 1 zusammengefasst.

### Beispiel 3.

In diesem Beispiel wird die Herstellung eines schlagzähgemachten PVC auf Basis eines Kern/Schale-Modifiers mit 50 Gew.-% PVC und 50 Gew.-% Polybutylacrylat beschrieben.

### 1. Synthese des Schlagzähmodifiers

### 1.1. Synthese des PVC-Kerns über Emulsionspolymerisation

Der PVC-Kern wird wie im Beispiel 1 synthetisiert, der Feststoffgehalt der PVC-Dispersion wird auf 42.5 Gew-% eingestellt.

### 1.2. Synthese des Kern/Schale-Modifiers über Emulsionspolymerisation

In einen 235 L Reaktor werden 41.16 kg entionisiertes Wasser und 58.82 kg des unter 1.1. synthetisierten PVC-Latex bei laufender Rührung gegeben. Anschließend wird der Reaktor mit Stickstoff gespült und auf die Polymerisationstemperatur von 80 °C aufgeheizt. Danach wird gleichzeitig die Dosierung von 24.37 kg *n-*Butylacrylat, 637.7 g Allylmethacrylat und 10 kg einer 0.5 %igen Ammoniumperoxodisulfatlösung gestartet. Die Polymerisation ist nach 300 min beendet.

Der resultierende Kern/Schale-Modifierlatex hat ein Kern/Schale-Gewichtsverhältnis von 50/50 und eine volumenbezogene mittlere Teilchengröße von ca. 125 nm.

### 2. Synthese des schlagzähmodifizierten PVCs über Suspensionspolymerisation

Ein 650 L-Reaktor wird mit 239.1 kg Wasser, 55.21 kg des unter 1.2. hergestellten Kern/Schale-Modifierlatex, 852 g eines Vinylalkohol/Vinylacetat-Copolymers, 53.8 g Lauroylperoxid und 44.85 g Dicetylperoxodicarbonat befüllt. Der Reaktor wird mit Stickstoff gespült und evakuiert. Anschließend wird die Rührung eingeschaltet und der Reaktor auf 60 °C aufgeheizt. In der Aufheizphase werden 239.1 kg Vinylchlorid im Schuß zugegeben.

Die Polymerisation ist nach Druckabfall und 1 h Nachrührzeit beendet, der Reaktor wird entgast und die resultierende PVC-Dispersion abfiltriert und in einem Wirbeltrockner getrocknet.

Das Pulver wird anschließend homogenisiert, mit Suspensions-PVC auf einen Kern/Schale-Modifiergehalt von 6.5 % abgemischt und in einer Fensterprofilrezeptur auf einem Krauss-Maffei KMD 90 Extruder bei einer Schneckendrehzahl von 15 UpM weiterverarbeitet. Die am Profil gemessen Eigenschaften sind in Tabelle 1 zusammengefasst.

### Beispiel 4

In diesem Beispiel wird die Herstellung eines schlagzähgemachten PVC auf Basis eines Kern/Schale-Modifiers mit 30 Gew.-% PVC und 70 Gew.-% Polybutylacrylat und einer
einer zusätzlichen verträglichmachenden Schicht aus Polymethylmethacrylat beschrieben.

### 1.1. Synthese des PVC-Kerns über Emulsionspolymerisation

Der PVC-Kern wird wie im Beispiel 1 synthetisiert, der Feststoffgehalt der PVC-Dispersion wird auf 41.5 Gew-% eingestellt.

### 1.2. Synthese des Kern/Schale-Modifiers über Emulsionspolymerisation

In einen 40 L Reaktor werden 10.2 kg entionisiertes Wasser und 6.265 kg des unter 1.1. synthetisierten PVC-Latex bei laufender Rührung gegeben. Anschließend wird der Reaktor mit Stickstoff gespült und auf die Polymerisationstemperatur von 80 °C aufgeheizt. Danach wird gleichzeitig die Dosierung von 5.054 kg *n*-Butylacrylat, 123.8 g Allylmethacrylat, 1.733 kg einer 1 %igen Kaliummyristat-Lösung und 1.733 kg einer 0.5 %igen Ammoniumperoxodisulfatlösung gestartet. Nach 180 min Dosierzeit wird der Reaktor weitere 60 min gerührt, dann werden 891.8 g Methylmethacrylat in 30 min zugegeben. Die Initiatorzugabe erstreckt sich aus gesamte Polymerisationszeit. Nach 330 min ist die Polymerisation beendet.

### 2. Synthese des schlagzähmodifizierten PVCs über Suspensionspolymerisation

Ein 150 L-Reaktor wird mit 53.6 kg Wasser, 12.43 kg des unter 1.2. hergestelhen Kern/Schale-Modifierlatex (Feststoffgehalt: 32.7 %), 124.3 g eines Vinylalkohol/Vinylacetat-Copolymers, 16.91 g Lauroylperoxid und 14.1 g Dicetylperoxodicarbonat befüllt. Der Reaktor wird mit Stickstoff gespült und evakuiert. Anschließend wird die Rührung eingeschaltet und auf 60 °C aufgeheizt. In der Aufheizphase werden 43.76 kg Vinylchlorid im Schuß zugegeben.

Die Polymerisation ist nach Druckabfall und 1 h Nachrührzeit beendet, der Reakor wird entgast und die resultierende PVC-Dispersion abfiltriert und in einem Wirbeltrockner getrocknet.

### Verzgleichsbeispiel

In diesem Beispiel wird die Herstellung eines schlagzähgemachten PVC auf Basis eines Polybutylacrylat-Modifiers beschrieben.

### 1. Synthese des Polybutylacrylat-Modifiers über Emulsionspolymerisation

In einen 235 L Reaktor werden 64.77 kg entionisiertes Wasser, 2.09 kg Butylacrylat, 20.9 g Diallylphthalat, 1.393 kg einer 7.5 %igen Kaliummyristatlösung und 19.39 g Ammoniumperoxodisulfat vorgelegt. Der Reaktor wird mit Stickstoff gespült und die Reaktormischung wird unter Rührung auf 80 °C aufgeheizt. Nach 1 h Polymerisationszeit werden bei 80 °C 60.61 kg Butylacrylat, 612.4 g Diallylphthalat und 52.88 kg einer 1 %igen Kaliummyristatlösung in 420 min zudosiert.

Es resultiert ein Polybutylacrylat-Latex mit einem Festststoffgehalt von 33.4 % und einer mittleren volumenbezogenen Teilchengröße von 175 nm.

### 2. Synthese des schlagzähmodifizierten PVCs über Suspensionspolymerisation

Ein 650 L-Reaktor wird mit 240 kg Wasser, 54.22 kg des unter 1. hergestellten Modifierlatex, 852 g eines Vinylalkohol/Vinylacetat-Copolymers, 53.8 g Lauroylperoxid und 44.85 g Dicetylperoxodicarbonat befüllt. Der Reaktor wird mit Stickstoff gespült und evakuiert. Anschließend wird die Rührung eingeschaltet und auf 60 °C aufgeheizt. In der Aufheizphase werden 194.9 kg Vinylchlorid im Schuß zugegeben.

Die Eigenschaften der in den Beispielen 1 - 4 aufgearbeiteten Polymere sind in der Tabelle 1 aufgelistet.

**Tabelle 1. Eigenschaften von Kern-Schale-modifizierten PVC-Typen**

| Versuchsprodukt | Modifier-Gehalt im Compound, % | | Mechanische Eigenschaften | | | | | Glanz (DIN 67530) | |
|---|---|---|---|---|---|---|---|---|---|
| | Gesamt | KautschukPhase | Nachschwindung , % (Maßänderung nach Warmlagerung, DIN EN 479) | | Kugelfall, m (DIN EN 477) | Kerbschlagzähigkeit, kJ/m² (DIN 53753) | Eckenfestigkeit, kN (DIN EN 514) | Innen | Außen |
| | | | Außen | Innen | | | | | |
| *Vergleichsbeispiel* | *6.5* | *6.5* | *1.55* | *1.85* | *2.0* | *64* | *7300* | *34-37* | *40-49* |
| Beispiel 1 | 6.5 | 4.55 | 1.40 | 1.50 | 2.0 | 70 | 7630 | 50-64 | 49-58 |
| Beispiel 2 | 6.5 | 3.9 | 1.20 | 1.40 | 2.0 | 68 | 7925 | 61-71 | 54-68 |
| Beispiel 3 | 6.5 | 3.25 | 1.30 | 1.50 | 2.0 | 63 | 7800 | 58-68 | 51-64 |
| Beispiel 4 | 6.5 | 3.79 | 1.30 | 1.40 | 2.0 | 68 | 7600 | 58-62 | 57-69 |

## Patentansprüche

1. Verfahren zur Herstellung einer thermoplastischen Polyvinylchlorid-Formmasse modifiziert mit einem elastomerhaltigen Kern-Schale-Modifier, mit verbesserter Schlag- und Eckenfestigkeit und verbessertem Oberflächenglanz, wobei der Kern des Kern-Schale-Modifiers aus Polyvinylchlorid oder Vinylchlorid-Copolymeren und die Schale des Schlagzähmodifiers aus vernetzten Alkylacrylat- oder Alkylmethacrylat-Homo- oder -Copolymeren besteht, **dadurch gekennzeichnet dass** der Kern-Schale-Modifier über Emulsionspolymerisation in 2 Stufen hergestellt wird, wobei in der 1. Stufe der PVC-Homo- oder Copolymerkern und in der 2. Stufe die elastomere Schale in Anwesenheit des Kerns synthetisiert wird, und die Pfropfpolymerisation des Vinylchloridmonomers im Suspensionsverfahren in Anwesenheit dieses Kern-Schale-Modifiers erfolgt.

2. Verfahren nach Anspruch 1, **dadurch gekennzeichnet, dass** im Schlagzähmodifier der Kernanteil von 5 bis 80 Gew.-% und der Schalenanteil von 20 bis 95 Gew.-% liegt.

3. Verfahren nach einem der vorhergehenden Ansprüche, **dadurch gekennzeichnet, dass** im Schlagzähmodifier der Kernanteil von 20 bis 60 Gew.-% und der Schalenanteil von 40 bis 80 Gew.-% liegt.

4. Verfahren nach einem der vorhergehenden Ansprüche, **dadurch gekennzeichnet, dass** der Gesamtdurchmesser der Modifierteilchen zwischen 50 und 800 nm liegt.

5. Verfahren nach einem der vorhergehenden Ansprüche, **dadurch gekennzeichnet, dass** der Gesamtdurchmesser der Modifierteilchen zwischen 60 und 400 nm liegt.

6. Verfahren nach einem der vorhergehenden Ansprüche, **dadurch gekennzeichnet, dass** der Kern des Modifiers aus reinem PVC oder aus einem VC-Copolymer mit mindestens 50 Gew.-% Vinylchlorid besteht.

7. Verfahren nach einem der vorhergehenden Ansprüche, **dadurch gekennzeichnet, dass** die Schale des Schlagzähmodifiers aus einem Alkylacrylat- oder -methacrylat-Homo- oder -Copolymer mit einer Glasübergangstemperatur < 10°C, vernetzt mit einem mehrfunktionellen Comonomer mit nichtkonjugierten Doppelbindungen, besteht.

8. Verfahren nach einem der vorhergehenden Ansprüche, **dadurch gekennzeichnet, dass** die Schale des Schlagzähmodifiers aus einem Alkylacrylat- oder -methacrylat-Homo- oder -Copolymer mit einer Glasübergangstemperatur < -10°C, vernetzt mit einem mehrfunktionellen Comonomer mit nichtkonjugierten Doppelbindungen, besteht.

9. Verfahren nach einem der vorhergehenden Ansprüche, **dadurch gekennzeichnet, dass** auf die Schale des Kern-Schale-Schlagzähmodifiers eine zusätzliche verträglichmachende Schicht, bestehend aus Polymethacrylaten mit einer Glasübergangstemperatur > 25°C, in einem Anteil von max. 50 Gew.-%, bezogen auf die Gesamtschale, aufpolymerisiert wird.

10. Verfahren nach einem der vorhergehenden Ansprüche, **dadurch gekennzeichnet, dass** auf die Schale des Kern-Schale-Schlagzähmodifiers eine zusätzliche verträglichmachende Schicht, bestehend aus Polymethacrylaten mit einer Glasübergangstemperatur > 70°C, in einem Anteil von max. 50 Gew.-% bezogen auf die Gesamtschale, aufpolymerisiert wird.

11. Thermoplastische PVC-Formmasse, erhältlich nach einem Verfahren nach einem der vorhergehenden Ansprüche, **dadurch gekennzeichnet, dass** der Anteil an Kern-Schale-Modifier am Gesamtmonomer zwischen 2 und 80 Gew.-% beträgt.

12. Thermoplastische PVC-Formmasse nach Anspruch 11, **dadurch gekennzeichnet, dass** der Anteil an Kern-Schale-Modifier am Gesamtmonomer zwischen 3 und 50 Gew.-% beträgt.

13. Verwendung der PVC-haltigen Formmassen nach einem der Ansprüche 11 und 12 in Kunststoffprofilen zur Herstellung von Fensterrahmen oder Rohren.

## Claims

1. A method for preparing a thermoplastic polyvinyl chloride molding material, modified with an elastomer-containing core-shell modifier, having improved impact and corner strength and improved surface gloss, wherein the core of the core-shell modifier consists of polyvinyl chloride or vinyl chloride copolymers and the shell of the impact modifier consists of cross-linked alkyl acrylate or alkyl methacrylate homo- or copolymers, **characterized in that** said core-shell modifier is prepared in 2 steps using emulsion polymerization, wherein, in the ^{1st} step, the PVC homo- or copolymer core is synthesized and, in the 2^{nd} step, the elastomeric shell is synthesized in the presence of the core, and the graft polymerization of the vinyl chloride monomer is carried out in a suspension polymerization process in the presence of said core-shell modifier.

2. The method according to claim 1, **characterized in that**, in said impact modifier, the percentage of the core is from 5 to 80 % by weight and the percentage of the shell is from 20 to 95 % by weight.

3. The method according to any one of the preceding claims, **characterized in that**, in the impact modifier, the percentage of the core is from 20 to 60 % by weight and the percentage of the shell is from 40 to 80 % by weight.

4. The method according to any one of the preceding claims, **characterized in that** the total diameter of the modifier particles is between 50 and 800 nm.

5. The method according to any one of the preceding claims, **characterized in that** the total diameter of the modifier particles is between 60 and 400 nm.

6. The method according to any one of the preceding claims, **characterized in that** the core of the modifier consists of pure PVC or of a VC copolymer having at least 50 % by weight of vinyl chloride.

7. The method according to any one of the preceding claims, **characterized in that** the shell of the impact modifier consists of an alkyl acrylate or alkyl methacrylate homo- or copolymer having a glass transition temperature of < 10°C, cross-linked with a multifunctional comonomer having nonconjugated double bonds.

8. The method according to any one of the preceding claims, **characterized in that** the shell of the impact modifier consists of an alkyl acrylate or alkyl methacrylate homo- or copolymer having a glass transition temperature of < -10 °C, cross-linked with a multifunctional comonomer having nonconjugated double bonds.

9. The method according to any one of the preceding claims, **characterized in that** an additional compatibilizing layer consisting of polymethacrylates having a glass transition temperature of > 25 °C is grafted onto the shell of the core-shell modifier in a percentage of max. 50 % by weight, based on the total shell.

10. The method according to any one of the preceding claims, **characterized in that** an additional compatibilizing layer consisting of polymethacrylates having a glass transition temperature of > 70 °C is grafted onto the shell of the core-shell modifier in a percentage of max. 50 % by weight, based on the total shell.

11. A thermoplastic PVC molding material obtainable by a method according to any one of the preceding claims, **characterized in that** the percentage of the core-shell modifier in the total amount of monomer is between 2 and 80 % by weight.

12. The thermoplastic PVC molding material according to claim 11, **characterized in that** the percentage of the core-shell modifier in the total amount of monomer is between 3 and 50 % by weight.

13. A use of said PVC-containing molding materials according to any one of claims 11 and 12 in plastic profiles for manufacturing window frames or tubes.

## Revendications

1. Procédé de fabrication d'une masse moulée thermoplastique en chlorure de polyvinyle, modifiée par un modificateur coeur-enveloppe contenant un élastomère, ayant une résistance améliorée aux chocs et aux entailles et une brillance de surface améliorée, dans lequel le coeur du modificateur coeur-enveloppe se compose de chlorure de polyvinyle ou de copolymères de chlorure de vinyle et l'enveloppe du modificateur de choc se compose d'homopolymères ou de copolymères d'alkylacrylate ou d'alkylméthacrylate réticulés, **caractérisé en ce que** le modificateur coeur-enveloppe est fabriqué en 2 étapes par polymérisation en émulsion, dans lequel, au cours de la 1^{ère} étape, le coeur d'homopolymère ou de copolymère en PVC est synthétisé et, au cours de la 2^{éme} étape, l'enveloppe en élastomère est synthétisée en présence du coeur, et la polymérisation-greffage du monomère de chlorure de vinyle s'effectue dans un procédé en suspension en présence de ce modificateur coeur-enveloppe.

2. Procédé selon la revendication 1, **caractérisé en ce que** la proportion du coeur dans le modificateur de choc va de 5 à 80 % en poids et la proportion de l'enveloppe va de 20 à 95 % en poids.

3. Procédé selon l'une des revendications précédentes, **caractérisé en ce que** la proportion du coeur dans le modificateur de choc va de 20 à 60 % en poids et la proportion de l'enveloppe va de 40 à 80 % en poids.

4. Procédé selon l'une des revendications précédentes, **caractérisé en ce que** le diamètre total des particules du modificateur se situe entre 50 et 800 nm.

5. Procédé selon l'une des revendications précédentes, **caractérisé en ce que** le diamètre total des particules du modificateur se situe entre 60 et 400 nm.

6. Procédé selon l'une des revendications précédentes, **caractérisé en ce que** le coeur du modificateur se compose de PVC pur ou d'un copolymère de VC ayant au moins 50 % en poids de chlorure de vinyle.

7. Procédé selon l'une des revendications précédentes, **caractérisé en ce que** l'enveloppe du modificateur de choc se compose d'un homopolymère ou copolymère d'alkylacrylate ou d'alkylméthacrylate ayant une température de transition vitreuse < 10 °C, réticulé avec un comonomère polyfonctionnel ayant des doubles liaisons non conjuguées.

8. Procédé selon l'une des revendications précédentes, **caractérisé en ce que** l'enveloppe du modificateur de choc se compose d'un homopolymère ou copolymère d'alkylacrylate ou d'alkylméthacrylate ayant une température de transition vitreuse < -10 °C, réticulé avec un comonomère polyfonctionnel ayant des doubles liaisons non conjuguées.

9. Procédé selon l'une des revendications précédentes, **caractérisé en ce que** l'on polymérise sur l'enveloppe du modificateur de choc coeur-enveloppe une couche de compatibilisation supplémentaire, constituée de polyméthacrylates ayant une température de transition vitreuse > 25 °C, en une proportion d'au maximum 50 % en poids, par rapport à l'enveloppe totale.

10. Procédé selon l'une des revendications précédentes, **caractérisé en ce que** l'on polymérise sur l'enveloppe du modificateur de choc coeur-enveloppe une couche de compatibilisation supplémentaire, constituée de polyméthacrylates ayant une température de transition vitreuse > 70 °C, en une proportion d'au maximum 50 % en poids, par rapport à l'enveloppe totale.

11. Masse moulée en PVC thermoplastique, pouvant être obtenue d'après un procédé selon l'une des revendications précédentes, **caractérisée en ce que** la proportion du modificateur coeur-enveloppe sur le monomère total se situe entre 2 et 80 % en poids.

12. Masse moulée en PVC thermoplastique selon la revendication 11, **caractérisée en ce que** la proportion du modificateur coeur-enveloppe sur le monomère total se situe entre 3 et 50 % en poids.

13. Utilisation des masses moulées contenant du PVC selon l'une des revendications 11 et 12 dans des profilés en plastique pour la fabrication de cadres de fenêtres ou de tubes.
